# EUROPEAN PATENT APPLICATION

(11) **EP 2 365 621 A1**
(43) Date of publication of application: **14.09.2011**
(21) Application number: 10002632.7
(22) Date of filing: 12.03.2010
(51) Int. Cl.: H02M 1/44, H02M 7/02

(54) **AC-TO-DC converting apparatus with EMI filtering function**

(71) Applicant: Elementech International Co., Ltd., Neihu Dist Taipei City 114 (TW)
(72) Inventor: Chou, Chien-Ning, Taipei City 114 (TW); Lin, Ching-Tsung, Taipei City 114 (TW); Fan, Sheng-Jan, Taipei City 114 (TW)
(74) Representative: TER MEER - STEINMEISTER & PARTNER GbR

(57) **Abstract**

An AC-to-DC converting apparatus (20) with EMI filtering function includes a half-bridge conversion and filtering unit (220), a common mode choke (Lcm), a differential mode choke (Ldm), and a load-end capacitor (C3). The half-bridge conversion and filtering unit (220) is serially connected between an AC power source (10) and a first terminal (P1) and a second terminal (P2) of the common mode choke (Lcm). The differential mode choke (Ldm) is serially connected between a third terminal (P3) of the common mode choke (Lcm) and the load-end capacitor (C3). Since the half-bridge conversion and filtering unit (220) can suppress harmony noise of the AC power source (10) during an AC-to-DC conversion, the low-frequency EMI performance of the AC-to-DC converting apparatus 20 can be enhanced.

## Description

### BACKGROUND OF THE INVENTION

### 1. Field of the Invention

The present invention relates to an AC-to-DC converting apparatus, and in particular to an AC-to-DC converting apparatus with EMI filtering function.

### 2. Description of Prior Art

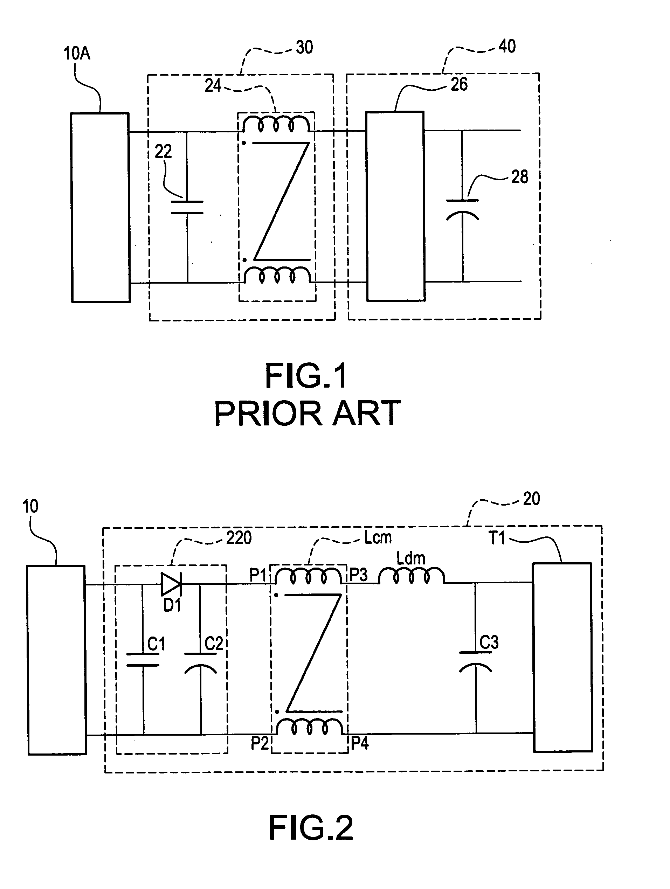

Please refer to FIG. 1, which is a block view showing an EMI filtering circuit and an AC-to-DC converting apparatus of prior art. First, an AC power source 10A is connected to an EMI filtering circuit 30 constituted of a capacitor 22 and a common mode choke 24, thereby filtering the EMI. Then, by means of an AC-to-DC converting apparatus 40 constituted of a rectifier circuit 26 (full-bridge rectifier or half-bridge rectifier) and a filtering capacitor 28, the AC power source 10A can be converted into a DC power source.

The effective range of frequency of the EMI filtering circuit 30 is between 150KHz to 30MHz. Since the lower limit of the frequency range is 150kHZ, the effective range is not broad enough. As a result, when the AC-to-DC converting apparatus 40 is used to filter the EMI, its effect is limited.

### SUMMARY OF THE INVENTION

In order to solve the above-mentioned drawbacks of prior art, the present invention provides an AC-to-DC converting apparatus with EMI filtering function, which is capable of generating a good EMI filtering effect.

The present invention is to provide an AC-to-DC converting apparatus with EMI filtering function, which can be applied to an AC power source. The AC-to-DC converting apparatus with EMI filtering function includes a half-bridge conversion and filtering unit, a common mode choke, a differential mode choke, and a load-end capacitor. The half-bridge conversion and filtering unit is serially connected between the AC power source and a first terminal and a second terminal of the common mode choke. The differential mode choke is serially connected between a third terminal of the common mode choke and the load-end capacitor.

### BRIEF DESCRIPTION OF THE DRAWINGS

FIG. 1 is a block view showing an EMI filtering circuit and an AC-to-DC converting apparatus of prior art;
FIG. 2 is a block view showing an AC-to-DC converting apparatus with EMI filtering function according to one embodiment of the present invention;
FIG. 3 is a block view showing an AC-to-DC converting apparatus with EMI filtering function according to another embodiment of the present invention; and
FIG. 4 is a block view showing an AC-to-DC converting apparatus with EMI filtering function according to a further embodiment of the present invention.

### DETAILED DESCRIPTION OF THE INVENTION

Please refer to FIG. 2, which is a block view showing the AC-to-DC converting apparatus with EMI filtering function according to one embodiment of the present invention. The AC-to-DC converting apparatus 20 with EMI filtering function can be applied to an AC power source 10. The AC-to-DC converting apparatus 20 with EMI filtering function includes a half-bridge conversion and filtering unit 220, a common mode choke Lcm, a differential mode choke Ldm, a load-end capacitor C3, and a transformer T1. The half-bridge conversion and filtering unit 220 comprises a first diode D1, a power-end capacitor C1, and a filtering capacitor C2.

The half-bridge conversion and filtering unit 220 is serially connected between the AC power source 10 and a first terminal P1 and a second terminal P2 of the common mode choke Lcm. The differential mode choke Ldm is serially connected between a third terminal P3 of the common mode choke Lcm and the load-end capacitor C3. The anode of the first diode D1 is electrically connected to the power-end capacitor C1 and the AC power source 10. The cathode of the first diode D1 is electrically connected to the filtering capacitor C2 and the first terminal P1 of the common mode choke Lcm. The second terminal P2 of the common mode choke Lcm is electrically connected to the power-end capacitor C1, the filtering capacitor C2, and the AC power source 10. The transformer T1 is electrically connected to the differential mode choke Ldm, the load-end capacitor C3, and a fourth terminal P4 of the common mode choke Lcm.

The filtering capacitor C2 may be an electrolytic capacitor, and the load-end capacitor C3 may be an electrolytic capacitor.

Since the half-bridge conversion and filtering unit 220 can suppress harmony noise of the AC power source 10 during an AC-to-DC conversion, the low-frequency EMI performance of the AC-to-DC converting apparatus 20 can be enhanced.

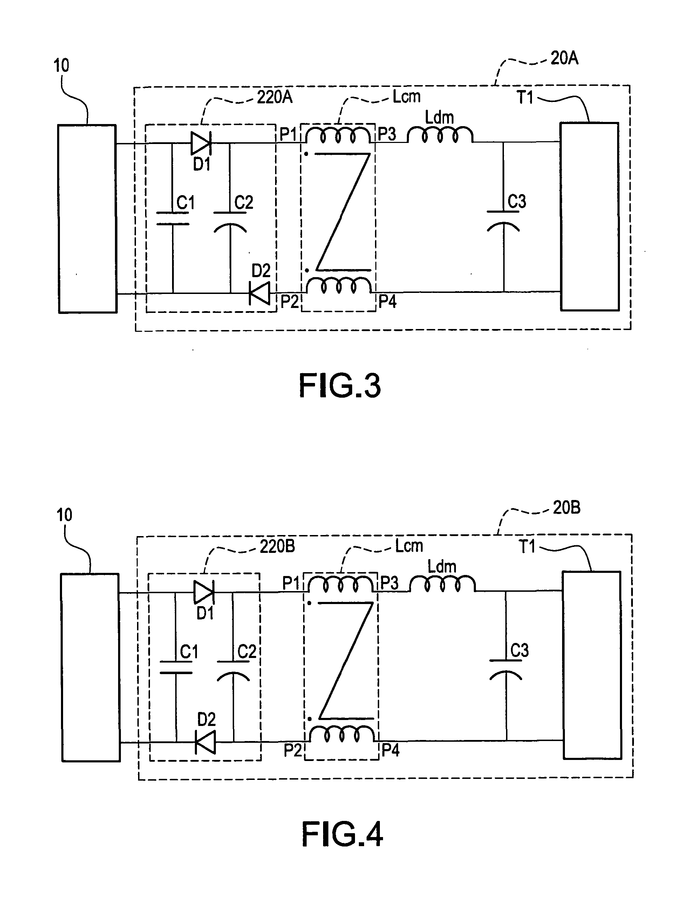

Please refer to FIG. 3, which is a block view showing the AC-to-DC converting apparatus with EMI filtering function according to another embodiment of the present invention. The AC-to-DC converting apparatus 20A with EMI filtering function can be applied to the AC power source 10. The AC-to-DC converting apparatus 20A with EMI filtering function includes a half-bridge conversion and filtering unit 220A, the common mode choke Lcm, the differential mode choke Ldm, the load-end capacitor C3, and the transformer T 1. The half-bridge conversion and filtering unit 220A comprises the first diode D1, the power-end capacitor C1, the filtering capacitor C2, and a second diode D2.

The half-bridge conversion and filtering unit 220A is serially connected between the AC power source 10 and a first terminal P 1 and a second terminal P2 of the common mode choke Lcm. The differential mode choke Ldm is serially connected between a third terminal P3 of the common mode choke Lcm and the load-end capacitor C3. The anode of the first diode D1 is electrically connected to the power-end capacitor C 1 and the AC power source 10. The cathode of the first diode D1 is electrically connected to the filtering capacitor C2 and the first terminal P1 of the common mode choke Lcm. The anode of the second diode D2 is electrically connected to a second terminal P1 of the common mode choke Lcm. The cathode of the second diode D2 is electrically connected to the power-end capacitor C1, the filtering capacitor C2, and the AC power source 10. The transformer T1 is electrically connected to the differential mode choke Ldm, the load-end capacitor C3, and a fourth terminal P4 of the common mode choke Lcm.

Since the half-bridge conversion and filtering unit 220A can suppress harmony noise of the AC power source 10 during an AC-to-DC conversion, the low-frequency EMI performance of the AC-to-DC converting apparatus 20A can be enhanced.

Please refer to FIG. 4, which is a block view showing the AC-to-DC converting apparatus with EMI filtering function according to a further embodiment of the present invention. The AC-to-DC converting apparatus 20B with EMI filtering function can be applied to an AC power source 10. The AC-to-DC converting apparatus 20B with EMI filtering function includes a half-bridge conversion and filtering unit 220B, the common mode choke Lcm, the differential mode choke Ldm, the load-end capacitor C3, and the transformer T1. The half-bridge conversion and filtering unit 220B comprises the first diode D1, the power-end capacitor C1, the filtering capacitor C2, and the second diode D2.

The half-bridge conversion and filtering unit 220B is serially connected between the AC power source 10 and a first terminal P1 and a second terminal P2 of the common mode choke Lcm. The differential mode choke Ldm is serially connected between a third terminal P3 of the common mode choke Lcm and the load-end capacitor C3. The anode of the first diode D1 is electrically connected to the power-end capacitor C1 and the AC power source 10. The cathode of the first diode D1 is electrically connected to the filtering capacitor C2 and the first terminal P1 of the common mode choke Lcm. The anode of the second diode D2 is electrically connected to a second terminal P2 of the common mode choke Lcm and the filtering capacitor C2. The cathode of the second diode D2 is electrically connected to the power-end capacitor C 1 and the AC power source 10. The transformer T1 is electrically connected to the differential mode choke Ldm, the load-end capacitor C3, and a fourth terminal P4 of the common mode choke Lcm.

Since the half-bridge conversion and filtering unit 220B can suppress harmony noise of the AC power source 10 during an AC-to-DC conversion, the low-frequency EMI performance of the AC-to-DC converting apparatus 20B can be enhanced.

After performing the above-mentioned electrical processes such as rectifying, filtering, EMI filtering or the like, the AC power source 10 can be converted into a DC power source with an EMI filtering effect better than prior art. According to the present invention, the effective range of frequency of the AC-to-DC converting apparatus with EMI filtering function is between 9KHz to 30MHz, which is broader than that achieved by prior art

(150KHz to 30MHz)

## Claims

1. An AC-to-DC converting apparatus (20 20A - 20B) with EMI filtering function, applied to an AC power source (10), the AC-to-DC converting apparatus (20 20A - 20B) with EMI filtering function including:
a half-bridge conversion and filtering unit (220 · 220A · 220B);
a common mode choke (Lcm);
a differential mode choke (Ldm); and
a load-end capacitor (C3),
wherein the half-bridge conversion and filtering unit 220 · 220A · 220B) is serially connected between the AC power source (10) and a first terminal (P1) and a second terminal (P2) of the common mode choke (Lcm), and the differential mode choke (Ldm) is serially connected between a third terminal (P3) of the common mode choke (Lcm) and the load-end capacitor (C3).

2. The AC-to-DC converting apparatus (20 - 20A 20B) with EMI filtering function according to claim 1, wherein the half-bridge conversion and filtering unit (220 · 220A · 220B) comprises a first diode (D1), an anode of the first diode (D1) is electrically connected to the AC power source (10), and a cathode of the first diode (D1) is electrically connected to the first terminal (P1) of the common mode choke (Lcm).

3. The AC-to-DC converting apparatus (20 ·20A · 20B) with EMI filtering function according to claim 2, wherein the half-bridge conversion and filtering unit (220 · 220A · 220B) further comprises a power-end capacitor (C1), and the power-end capacitor (C1) is electrically connected to the anode of the first diode (D1).

4. The AC-to-DC converting apparatus (20 · 20A · 20B) with EMI filtering function according to claim 3, wherein the half-bridge conversion and filtering unit (220 · 220A · 220B) further comprises a filtering capacitor (C2), and the filtering capacitor (C2) is electrically connected to the cathode of the first diode (D1).

5. The AC-to-DC converting apparatus (20A) with EMI filtering function according to claim 4, wherein the half-bridge conversion and filtering unit (220A) further comprises a second diode (D2), an anode of the second diode (D2) is electrically connected to the second terminal (P2) of the common mode choke (Lcm), and a cathode of the second diode (D2) is electrically connected to the power-end capacitor (C1), the filtering capacitor (C2) and the AC power source (10).

6. The AC-to-DC converting apparatus (20B) with EMI filtering function according to claim 4, wherein the half-bridge conversion and filtering unit (220B) further comprises a second diode (D2), an anode of the second diode (D2) is electrically connected to the second terminal (P2) of the common mode choke (Lcm) and the filtering capacitor (C2), and a cathode of the second diode (D2) is electrically connected to the power-end capacitor (C1) and the AC power source (10).

7. The AC-to-DC converting apparatus (20 · 20A · 20B) with EMI filtering function according to claim 4, further including a transformer (T1) electrically connected to the differential mode choke (Ldm), the load-end capacitor (C3) and a fourth terminal (P4) of the common mode choke (Lcm).

8. The AC-to-DC converting apparatus (20 · 20A · 20B) with EMI filtering function according to claim 4, wherein the filtering capacitor (C2) is an electrolytic capacitor.

9. The AC-to-DC converting apparatus (20 · 20A · 20B) with EMI filtering function according to claim 4, wherein the load-end capacitor (C3) is an electrolytic capacitor.
